# EUROPÄISCHE PATENTSCHRIFT

(11) **EP 1 322 711 B1**
(45) Veröffentlichungstag und Bekanntmachung des Hinweises auf die Patenterteilung: **12.08.2009**
(21) Anmeldenummer: 01986311.7
(22) Anmeldetag: 05.10.2001
(51) Int. Cl.: C09D 5/08, F16D 65/12

(54) **KORROSIONSSCHUTZLACK FÜR BREMSFLÄCHEN VON BREMSSCHEIBEN UND/ODER BREMSTROMMELN, DARAUS HERGESTELLTE KORROSIONSSCHUTZBESCHICHTUNG SOWIE VERFAHREN ZUM ENTFERNEN DER KORROSIONSSCHUTZBESCHICHTUNG**
ANTICORROSIVE PAINT FOR BRAKE SURFACES OF BRAKE DISCS AND/OR BRAKE DRUMS, ANTICORROSIVE COATING PRODUCED THEREFROM, AND METHOD FOR REMOVING THE ANTICORROSIVE COATING
PEINTURE DE PROTECTION CONTRE LA CORROSION POUR SURFACES DE FREINAGE DE DISQUES DE FREINS ET/OU DE TAMBOURS DE FREINS, REVETEMENT ANTICORROSION OBTENU A PARTIR DE LADITE PEINTURE DE PROTECTION CONTRE LA CORROSION ET PROCEDE POUR ELIMINER LEDIT REVETEMENT ANTICORROSION

(30) Priorität: 06.10.2000 DE 10049456
(43) Veröffentlichungstag der Anmeldung: 02.07.2003
(73) Patentinhaber: Daimler AG, 70327 Stuttgart (DE)
(72) Erfinder: BITZER, Rita, 71034 Böblingen (DE); PASSOTH, Half, 72181 Starzach (DE)
(74) Vertreter: Moore, David Simon
(86) Internationale Anmeldenummer: PCT/EP2001/011509
(87) Internationale Veröffentlichungsnummer: WO 2002/028972

(56) Entgegenhaltungen:
- EP-A- 0 976 795
- WO-A-95/15445
- US-A- 5 569 543
- US-A- 5 972 090
- DATABASE WPI Section Ch, Week 197709 Derwent Publications Ltd., London, GB; Class M13, AN 1977-15170Y XP002192143 & JP 52 005628 A (AKEBONO BRAKE IND CO LTD), 17. Januar 1977 (1977-01-17)

## Beschreibung

Die Erfindung betrifft ein Verfahren zum Korrosionsschutz von Bremsflächen von Bremsscheiben und/oder Breinstrommeln, eine daraus hergestellte Korrosionsschutzbeschichtung sowie ein Verfahren zum Entfernen der Korrosionsschutzbeschichtung, wie es bspw. aus der gattungsbildend zugrundegelegten US 5,569,543 A als bekannt ist.

Aus der US 5,569,543 A ist ein Korrosionsschutzlack für Bremsflächen bekannt, der als Korrosionsinhibitoren Metallteilchen, wie Zink und Aluminium aufweist. Das Gewichtsverhältnis von Metall zu Bindemittel ist hierbei mindestens 2.5.

Die EP 976 795 A betrifft ebenfalls ein Korrosionsschutzlack für Bremsflächen bekannt, der als Korrosionsinhibitor u.a. ein Metallphosphat, wie Zink-Aluminium-Polyphosphat aufweisen kann. Der Gewichtanteil des Korrosionsinhibitors an Lack beträgt hierbei zwischen 40 und 65 Gew.-%.

Zum Schutz vor Korrosion wird eine Bremsscheibe und/oder Bremstrommel i.a. lackiert. Hierbei wird ein Lack verwendet, der durch die abrasive Wirkung der Bremsbeläge im Bereich der Bremsfläche abgebremst, also entfernt werden kann. Diese Lösung hat ins besondere bei Fahrzeugen, die für den Überseetransport vorgesehen sind und bei Ersatzbremsscheiben bzw. -trommeln als besonders günstig erwiesen.

Trotz der Vorzüge des heutigen Verfahrens weisen damit behandelte Bremsflächen von Bremsscheiben bzw. Bremsflächen insbesondere durch die aggressive Salzluft bei den Überseetransporten immer noch Empfindlichkeiten beim Transport auf. Damit sind hohe Qualitätssicherungskosten und z.T. Nacharbeiten verbunden.

Die Aufgabe der Erfindung ist es, ein Verfahren zu entwickeln, mit dem eine Korrosionsschutzbeschichtung hergestellt werden kann, welche einen möglichst guten Korrosionsschutz auch bei Überseetransporten, eine geringere Nacharbeit und eine Kostenreduktion ermöglicht und bei dem der Korrosionsschutzlack möglichst einfach entfernbar ist.

Die Aufgabe wird erfindungsgemäß mit einem Verfahren mit den Verfahrensschritten des Anspruchs 1, mit einem Verfahren mit den Verfahrensschritten des Anspruchs 1 sowie mit Verfahren mit den Verfahrensschritten der Ansprüche 13 bzw. 14 gelöst. Durch die Belegung zumindest der Bremsflächen mit einem erfindungsgemäßen Korrosionsschutzlack mit einem hohen Anteil an von mit Sauerstoff reagierenden Schutzsubstanzen, wird ein Zutritt von Sauerstoff an die Bremsfläche unterbunden.

Um die gewünschte Wirkung zu erzielen, ist hierbei ein Schutzsubstanzanteil von mindestens 30 Vol.-%, bevorzugt mindestens 50 Vol.-% und besonders bevorzugt mindestens 70 Vol.-% in dem vorzugsweise ansonst herkömmlichen Lack und/oder Klarlack sinnvoll.

In vorteilhafter Weise handelt es sich bei diesen Schutzsubstanzen um Nichtalkali- und Nichterdalkalimetalle wie insbesondere Zink, elementares Aluminium, oder deren oxidierbaren Verbindungen, wie insbesondere FeO. Des weiteren sind auch Phosphor und/oder Phosphate geeignet.

In günstiger Weise werden die Schutzsubstanzen zumindest zum Teil beim Abbremsen in die Oberfläche der Bremsfläche insbesondere eingepreßt und/oder eingerieben, wo sie verbleiben und weiterhin einen Schutz der metallischen Oberfläche gegen Oxidation bewirken. Das Abbremsen kann zu jeder Zeit, bevorzugt jedoch vor der Auslieferung eines Kfz an einen Kunden erfolgen, bspw. auf einem Rollenprüfstand. Durch den Erhalt der Korrosionsschutzwirkung auch nach dem Abbremsen des Korrosionsschutz-beschichtung kann sogar in besonders günstiger Weise die Entfernung der Korrosionsschutzbeschichtung vor der Montage der Bremsscheibe, insbesondere in kostensparender Art kurz nach deren Herstellung erfolgen, so daß nur noch die fertige und gegen Korrosion geschützte Bremsscheibe montiert wird.

Durch das Einbringen der Schutzsubstanzen in die Oberflächenrauheiten, Poren und Riefen der Bremsfläche wird gleichzeitig die normale Oberflächenrauheit der Bremsflächen, die durch natürliche Poren des Bremsscheibenmaterials und/oder durch Schleif- und/oder Drehriefen zustande kommt, verringert. Als Resultat ergibt sich eine geringere tiefe der Korrosion, wodurch gleichzeitig wiederum die Wahrscheinlichkeit des Bremsrubbeln verringert ist.

Um ein besonders gutes Resultat zu erreichen, ist es günstig, wenn die mittlere Partikelgröße der Schutzsubstanzen kleiner als die maximale Rauhigkeit und/oder die mittlere Porenweite und/oder die mittlere Riefengröße der Bremsfläche ist.

Als preiswerteste Lösung hat sich momentan ein Metallack mit eine Zinkstaubanteil von ca. 80 Vol.-% erwiesen.

Weitere sinnvolle Ausgestaltungen der Erfindung sind den entsprechenden Unteransprüchen entnehmbar. Im übrigen wird die Erfindung anhand von in den Zeichnungen dargestellten Ausführungsbeispielen näher erläutert. Dabei zeigt
- Fig. 1: einen Ausschnitt eines Schnitte durch eine Bremsscheibe mit kombinierter Bremstrommel sowie darauf aufgetragenem Korrosionsschutzlack,
- Fig. 2: die Bremsscheibe nach Figur 1 mit zu einer Korrosionsschutzbeschichtung verfestigtem Korrosionsschutzlack, und
- Fig. 3: eine Vergrößerung einer Bremsfläche nach Abbremsen der Korrosionsschutzbeschichtung.

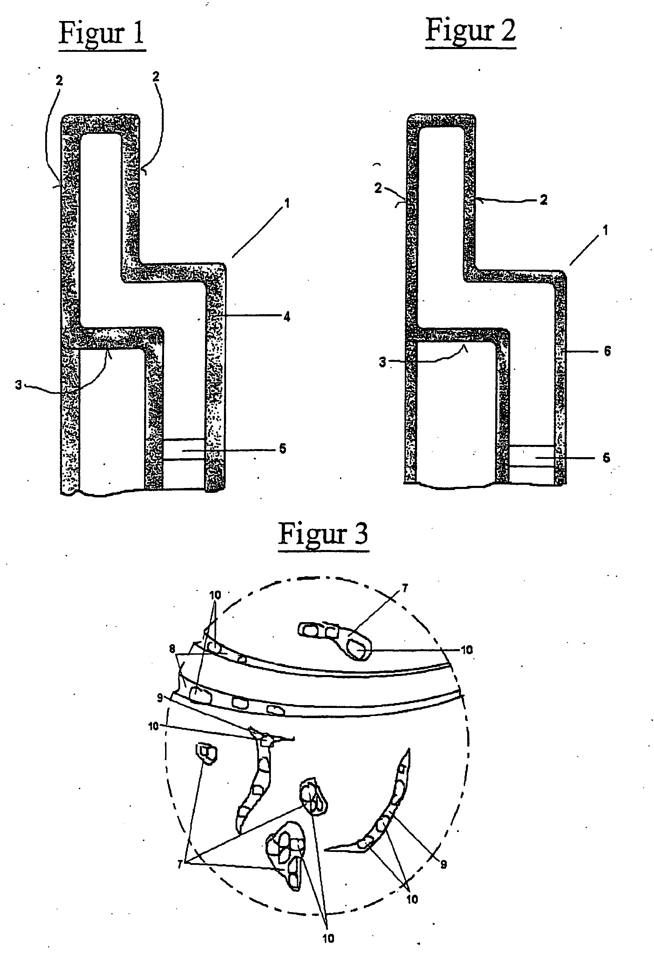

In Figur 1 ist ein Ausschnitt eines Schnittes durch eine Bremsscheibe 1 mit kombinierter Bremstrommel dargestellt. Die komplette Oberfläche der Bremsscheibe 1 ist mit einem Korrosionsschutzlack 4 versehen. Da der Korrosionsschutzlack bis auf die Schutzsubstanzen 10 (hier als einzelne Punkte dargestellt) mit einem herkömmlichen Lack identisch sein kann, ist es möglich, in mit einem normalen Spritz- und/oder Tauchverfahren auf die Oberfläche der Bremsscheibe 1 aufzutragen.

Nach dem Auftragen wird der Korrosionsschutzlack 4 zu der Korrosionsschutzbeschichtung 6 (siehe Figur 2) getrocknet bzw. abgebunden oder vernetzt. Da bei der Vernetzung des Korrosionsschutzlack das Lösemittel, vorzugsweise Wasser, aus der Beschichtung 6 entweicht, nimmt der Anteil der Schutzsubstanzen 10 in der Korrosionsschutzbeschichtung 6 gegenüber deren Anteil im Korrosionsschutzlack 4 zu. In der Figur 2 kann dies durch die höhere Dichte der Punkte und der Beschichtung 6 erkannt werden.

Durch den hohen Anteil an Schutzsubstanzen 10 von günstigerweise größer 70 Vol.-% kann selbst ein tiefer Riß die Bremsfläche 2 der Bremsscheibe und/oder die Bremsfläche 3 der Bremstrommel nicht durch Korrosion gefährden, da hierbei der Sauerstoff von den Schutzsubstanzen 10 abgefangen wird, wodurch diese selbst in Form einer Oxidation chemisch reagieren.

In Figur 3 ist eine Vergrößerung einer Bremsfläche 2, 3 nach dem Abbremsen der Korrosionsschutzbeschichtung 6 dargestellt. Hierbei ist deutlich zu erkennen, daß die Schutzsubstanzen 10 in Poren 7 und Riefen 8 oder in sonstigen Vertiefungen 9 eingebracht sind.

Hierdurch wird die normale Rauheit der Bremsfläche 2 und damit der zu erwartenden Korrosionstiefe verringert. Des weiteren ist zumindest zu Anfang auch der Rostbefall bei einem längeren Stillstand eines Fahrzeuges reduziert, da auch in diesem Fall der Korrosionsschutz durch Selbstoxidation der Schutzsubstanzen 10 wirksam bleibt; d.h. die eingebrachten Schutzsubstanzen 10 wirken in der Art einer Opferanode.

## Patentansprüche

1. Verfahren zum Korrosionsschutz für Bremsflächen von Bremsscheiben und/oder Bremstrommeln, wobei auf die Bremsflächen ein Korrosionsschutzlack (4) aufgetragen wird, welcher mit Sauerstoff reagierenden Schutzsubstanzen (10) aufweist,
**dadurch gekennzeichnet,**
**daß** die Schutzsubstanzen (10) mit einer mittleren Korngröße gewählt werden, die maximal der maximalen Rauhigkeit und/oder der mittleren Porenweite (7) und/oder der mittleren Riefengröße (8) der Bremsfläche (2, 3) entspricht.

2. Verfahren nach Anspruch 1,
**dadurch gekennzeichnet,**
**daß** die Schutzsubstanzen (10) aus der Gruppe der Nichtalkali- und Nichterdalkalimetalle und/oder oxidierbare Metallverbindungen und/oder Phosphate und/oder Phosphor entnommen werden.

3. Verfahren nach Anspruch 2,
**dadurch gekennzeichnet,**
**daß** als Schutzsubstanz (10) Zink und/oder Eisenoxid und/oder zumindest weitgehend elementares Aluminium gewählt wird.

4. Verfahren nach Anspruch 3,
**dadurch gekennzeichnet,**
**daß** als Eisenoxid FeO gewählt wird.

5. Verfahren nach Anspruch 3,
**dadurch gekennzeichnet,**
**daß** Aluminium in Pulverform gewählt wird.

6. Verfahren nach Anspruch 2,
**dadurch gekennzeichnet,**
**daß** die Schutzsubstanz (10) als Pulver gewählt wird.

7. Verfahren nach Anspruch 1,
**dadurch gekennzeichnet,**
**daß** dem Korrosionsschutzlack mindestens 30 Vol-% Schutzsubstanzen (10) beigegeben werden.

8. Verfahren nach Anspruch 1,
**dadurch gekennzeichnet,**
**daß** dem Korrosionsschutzlack mindestens 50 Vol-% Schutzsubstanzen (10) beigegeben werden.

9. Verfahren nach Anspruch 1,
**dadurch gekennzeichnet,**
**daß** dem Korrösionsschutzlack mindestens 70 Vol-% Schutzsubstanzen (10) beigegeben werden.

10. Verfahren nach Anspruch 1,
**dadurch gekennzeichnet,**
**daß** als Ausgangsmaterial für den Korrosionsschutzlack (4) ein normaler Klar- oder farbiger Lack gewählt wird.

11. Verfahren nach Anspruch 1,
**dadurch gekennzeichnet,**
**daß** als Ausgangsmaterial ein Lack mit geringem Anteil an organischem Lösungsmittel gewählt wird.

12. Verfahren nach Anspruch 1,
**dadurch gekennzeichnet,**
**daß** als Ausgangsmaterial ein Lack ein Wasserbasislack gewählt wird.

13. Korrosionsschutzbeschichtung für Bremsflächen von Bremsscheiben und/oder Bremstrommeln, erhalten mit einem Korrosionsschutzlack nach einem der Ansprüche 1 bis 12.

14. Verfahren zum Entfernen eines Korrosionsschutzbeschichtung von einer Bremsfläche einer Bremsscheibe und/oder Bremstrommel, bei welchem Verfahren die Korrosionsschutzbeschichtung durch die abrasive Wirkung der Bremsbeläge beim Bremsen abgerieben wird, wobei dem Korrosionsschutzlack vor seinem Auftrag auf die Bremsfläche Schutzsubstanzen beigegeben werden, welche bei Kontakt mit Sauerstoff mit diesem chemisch reagieren und/oder diesen an sich binden,
**dadurch gekennzeichnet,**
**daß** Schutzsubstanzen gemäß Anspruch 1 beim abrasiven Entfernen der Korrosionsschutzbeschichtung (6) in die Bremsfläche (2, 3) eingerieben werden.

15. Verfahren nach Anspruch 14,
**dadurch gekennzeichnet,**
**daß** die Schutzsubstanzen (10) in Vertiefungen (9) und/oder Rauheiten und/oder Poren (7) und/oder Rillen (8) der Reibfläche (2, 3) der Bremsscheibe (1) eingerieben werden.

16. Verfahren nach Anspruch 14,
**dadurch gekennzeichnet,**
**daß** als Schutzsubstanzen (10) Nichtalkali- und Nichterdalkalimetalle und/oder oxidierbare Metallverbindungen und/oder Phosphate und/oder Phosphor eingerieben werden.

17. Verfahren nach Anspruch 14,
**dadurch gekennzeichnet,**
**daß** als Schutzsubstanz (10) Zink und/oder reduzierbares Eisenoxid eingerieben wird.

18. Verfahren nach Anspruch 14,
**dadurch gekennzeichnet,**
**daß** als Schutzsubstanz (10) Zink und/oder reduzierbares Eisenoxid und/oder zumindest weitgehend elementares Aluminium in Pulverform eingerieben wird.

19. Verfahren nach Anspruch 18,
**dadurch gekennzeichnet,**
**daß** als Eisenoxid FeO eingerieben wird.

20. Verfahren nach Anspruch 14,
**dadurch gekennzeichnet,**
**daß** die Korrosionsschutzbeschichtung (6) vor der Abgabe der Bremsscheibe (1) und/oder eines damit bestückten Fahrzeuges an einen Käufer abgerieben wird.

21. Verfahren nach Anspruch 14,
**dadurch gekennzeichnet,**
**daß** die Korrosionsschutzbeschichtung (6) nach der Montage der Bremsscheibe (1) und/oder Bremstrommel an das Fahrzeug abgerieben wird.

22. Verfahren nach Anspruch 14,
**dadurch gekennzeichnet,**
**daß** die Korrosionsschutzbeschichtung (6) vor der Montage der Bremsscheibe (1) und/oder Bremstrommel an das Fahrzeug abgerieben wird.

## Claims

1. Method for protecting brake surfaces of brake discs and/or brake drums against corrosion, wherein an anticorrosive paint (4) containing protective substances (10) reacting with oxygen is applied to the brake surfaces,
**characterised in that**
the protective substances (10) are selected with an average particle size which maximally corresponds to the maximum roughness and/or the average pore size (7) and/or the average score size (8) of the brake surface (2, 3).

2. Method according to claim 1,
**characterised in that**
the protective substances (10) are selected from the group of non-alkali and non-alkaline earth metals and/or oxidisable metal compounds and/or phosphates and/or phosphorus.

3. Method according to claim 2,
**characterised in that**
zinc and/or iron oxide and/or at least largely elemental aluminium is/are selected as protective substance (10).

4. Method according to claim 3,
**characterised in that**
FeO is selected as iron oxide.

5. Method according to claim 3,
**characterised in that**
aluminium in powder form is selected.

6. Method according to claim 2,
**characterised in that**
the protective substance (10) is selected as a powder.

7. Method according to claim 1,
**characterised in that**
at least 30% by volume of protective substances (10) are added to the anticorrosive paint.

8. Method according to claim 1,
**characterised in that**
at least 50% by volume of protective substances (10) are added to the anticorrosive paint.

9. Method according to claim 1,
**characterised in that**
at least 70% by volume of protective substances (10) are added to the anticorrosive paint.

10. Method according to claim 1,
**characterised in that**
a standard clear or coloured paint is selected as a starting material for the anticorrosive paint (4).

11. Method according to claim 1,
**characterised in that**
a paint with a small proportion of organic solvent is selected as a starting material.

12. Method according to claim 1,
**characterised in that**
a water-based paint is selected as a starting material.

13. Anticorrosive coating for brake surfaces of brake discs and/or brake drums, obtained with an anticorrosive paint according to any of claims 1 to 12.

14. Method for removing an anticorrosive coating from a brake surface of a brake disc and/or brake drum, wherein the anticorrosive coating is abraded by the abrasive action of the brake pads or brake linings in the braking process, wherein protective substances chemically reacting with oxygen and/or binding oxygen on contact therewith are added to the anticorrosive paint before it is applied to the brake surface,
**characterised in that**
protective substances according to claim 1 are rubbed into the brake surface (2, 3) during the abrasive removal of the anticorrosive coating (6).

15. Method according to claim 14,
**characterised in that**
the protective substances (10) are rubbed into cavities (9) and/or rough areas and/or pores (7) and/or grooves (8) of the friction surface (2, 3) of the brake disc (1).

16. Method according to claim 14,
**characterised in that**
non-alkali and non-alkaline earth metals and/or oxidisable metal compounds and/or phosphates and/or phosphorus is/are rubbed in as protective substances (10).

17. Method according to claim 14,
**characterised in that**
zinc and/or reducible iron oxide is/are rubbed in as a protective substance (10).

18. Method according to claim 14,
**characterised in that**
zinc and/or reducible iron oxide and/or at least largely elemental aluminium in powder form is/are rubbed in as a protective substance (10).

19. Method according to claim 18,
**characterised in that**
FeO is rubbed in as iron oxide.

20. Method according to claim 14,
**characterised in that**
the anticorrosive coating (6) is abraded before the brake disc (1) and/or a vehicle to which it is fitted is/are handed over to a customer.

21. Method according to claim 14,
**characterised in that**
the anticorrosive coating (6) is abraded after the brake disc (1) and/or the brake drum is/are fitted to the vehicle.

22. Method according to claim 14,
**characterised in that**
the anticorrosive coating (6) is abraded before the brake disc (1) and/or the brake drum is/are fitted to the vehicle.

## Revendications

1. Procédé de protection contre la corrosion des surfaces de freinage de disques de frein et/ou de tambours de frein, une peinture de protection (4) contre la corrosion étant appliquée sur les surfaces de freinage, laquelle présente des substances de protection (10) réagissant au contact de l'oxygène, **caractérisé en ce que** les substances de protection (10) sélectionnées présentent une granulométrie moyenne, qui correspond à la rugosité maximale et/ou à la porosité moyenne (7) et/ou à la taille (8) des rainures de la surface de freinage (2, 3).

2. Procédé selon la revendication 1, **caractérisé en ce que** les substances de protection (10) proviennent du groupe des métaux non alcalins et non alcalinoterreux et/ou des composés métalliques oxydables et/ou du phosphate et/ou du phosphore.

3. Procédé selon la revendication 2, **caractérisé en ce que** le zinc et/ou l'oxyde de fer et/ou au moins l'aluminium élémentaire est (sont) sélectionné(s) en grande partie en tant que substance de protection (10).

4. Procédé selon la revendication 3, **caractérisé en ce que** FeO est sélectionné en tant qu'oxyde de fer.

5. Procédé selon la revendication 3, **caractérisé en ce que** l'aluminium est sélectionné sous forme de poudre.

6. Procédé selon la revendication 2, **caractérisé en ce que** la substance de protection (10) est choisie en tant que poudre.

7. Procédé selon la revendication 1, **caractérisé en ce que** 30 pourcent en volume de substances de protection sont ajoutés à la peinture de protection contre la corrosion (10).

8. Procédé selon la revendication 1, **caractérisé en ce que** 50 pourcent en volume de substances de protection sont ajoutés à la peinture de protection contre la corrosion (10).

9. Procédé selon la revendication 1, **caractérisé en ce que** 70 pourcent en volume de substances de protection sont ajoutés à la peinture de protection contre la corrosion (10).

10. Procédé selon la revendication 1, **caractérisé en ce qu'**une peinture normale transparente ou de couleur est sélectionnée en tant que matériau de base pour la peinture de protection contre la corrosion (4).

11. Procédé selon la revendication 1, **caractérisé en ce qu'**une peinture à faible proportion de solvant organique est sélectionnée.

12. Procédé selon la revendication 1, **caractérisé en ce qu'**une peinture aqueuse est sélectionnée en tant que matériau de base.

13. Revêtement anticorrosion pour des surfaces de freinage de disques de frein et/ou de tambours de frein, obtenu à partir d'une peinture de protection contre la corrosion selon l'une des revendications 1 à 12.

14. Procédé pour enlever un revêtement anticorrosion d'une surface de freinage d'un disque de frein et/ou de tambour de frein, avec lequel le revêtement anticorrosion est usé par abrasion lors du freinage sous l'effet de l'action abrasive des garnitures de frein, des substances de protection étant ajoutées à la peinture de protection contre la corrosion avant son application sur la surface de freinage, lesquelles réagissent chimiquement au contact de l'oxygène à celui-ci et/ou se lient à celui-ci, **caractérisé en ce que** selon la revendication 1 des substances de protection s'incrustent dans la surface de freinage (2, 3) au moment d'un retrait abrasif du revêtement anticorrosion (6).

15. Procédé selon la revendication 14, **caractérisé en ce que** les substances de protection (10) sont incrustées dans les évidements (9) et/ou les aspérités et/ou les pores (7) et/ou les rainures (8) de la surface de frottement (2, 3) du disque de frein.

16. Procédé selon la revendication 14, **caractérisé en ce que** des métaux non alcalins et non alcalinoterreux et/ou composés métalliques oxydables et/ou du phosphate et/ou du phosphore sont incrustés en tant que substances de protection (10).

17. Procédé selon la revendication 14, **caractérisé en ce que** le zinc et/ou l'oxyde de fer réductible est/sont incrusté(s) en tant que substance de protection (10).

18. Procédé selon la revendication 14, **caractérisé en ce que** le zinc et/ou l'oxyde de fer réductible et/ou au moins l'aluminium en grande partie élémentaire est/sont incrusté(s) sous forme de poudre en tant que substance de protection (10).

19. Procédé selon la revendication 18, **caractérisé en ce que** FeO est incrusté en tant qu'oxyde de fer.

20. Procédé selon la revendication 14, **caractérisé en ce que** le revêtement anticorrosion (6) du disque de frein (1) et/ou d'un véhicule équipé avec celui-ci est usé avant la livraison au client.

21. Procédé selon la revendication 14, **caractérisé en ce que** le revêtement anticorrosion (6) est usé après le montage du disque de frein (1) et/ou du tambour de frein sur le véhicule.

22. Procédé selon la revendication 14, **caractérisé en ce que** le revêtement anticorrosion (6) est usé avant le montage du disque de frein (1) et/ou du tambour de frein sur le véhicule.
